# EUROPEAN PATENT SPECIFICATION

(11) **EP 4 019 313 B1**
(45) Date of publication and mention of the grant of the patent: **07.05.2025**
(21) Application number: 21216899.1
(22) Date of filing: 22.12.2021
(51) Int. Cl.: B60K 35/50, B60K 35/00, B60R 13/02

(54) **BACKLIT INTERIOR PRODUCT OF A VEHICLE**
HINTERLEUCHTETES INNENRAUMPRODUKT EINES FAHRZEUGS
PRODUIT INTÉRIEUR RÉTRO-ÉCLAIRÉ D'UN VÉHICULE

(30) Priority: 22.12.2020 ES 202031287
(43) Date of publication of application: 29.06.2022
(73) Proprietor: Seat, S.A., 08760 Martorell (ES)
(72) Inventor: SANCHEZ CASTILLO, Juan Antonio, 08760 Martorell (ES); LORENTE CERVERA, Nuria, 08760 Martorell (ES); VICENT FUENTES, Francisco Félix, 08760 Martorell (ES)
(74) Representative: Pons

(56) References cited:
- WO-A1-2020/081593
- DE-A1- 102019 134 504
- DE-A1- 102020 205 520
- FR-A1- 3 053 942
- US-A1- 2015 298 608

## Description

According to a first aspect, the present invention relates to a backlit interior product of a vehicle, wherein the backlit interior product is formed by a plurality of components, and said interior product can preferably be part of a specific region of a door panel of a vehicle, such as the region of the insert which is the part above the armrest of the door panel or else the armrest, although it can also be part of other interior parts of a vehicle, such as the dashboard or the central console.

The multicomponent product of the present invention, which is a liner and is part of an interior part of a vehicle, is capable of generating a point-source surface backlighting in at least one embossment or protuberance located in one or more specific areas of a visible part of the interior of a vehicle, where an observer located in the interior of the compartment of the vehicle perceives at least one lit embossment. The main purpose of this multicomponent product is basically one of aesthetics and finish, assuring at all times the safety of the vehicle occupants, particularly in the event of direct contact with the backlit interior product.

According to a second aspect, this invention also relates to a door panel of a vehicle including the backlit interior product, with the same objectives as those set forth above. Namely, the smaller volume occupied by this interior product, as well as the smaller quantity of components, favour the integration thereof in a door panel.

### Background of the invention

The doors of a vehicle have certain regions with a hard finish and certain regions with a soft or padded finish, such as the region of the insert or of the armrest, for example. Namely, the region of the insert has a soft or padded finish given the possibility of there being direct contact with some part of the human body, such as the elbow, arm or hand of a vehicle occupant, for example.

Different solutions in which there are a series of point-source protuberances in regions of the interior of the vehicle, such as the region of the insert of the door panel, and lighting said protuberances for aesthetic purposes for the user, are known.

One of the problems existing today is that in interior regions of the vehicle which have a soft or padded finish, given the existence of a protuberance protruding from same, it can cause injuries or harm by direct contact with the user, as there may be direct contact during normal operation of the vehicle.

Document FR3053942A1 discloses an embellisher for a motor vehicle, comprising: a frame, a flexible surface skin covering all or part of the frame, a layer of compressible foam connecting the skin and the frame. The embellisher comprises at least one light guide, the light guide forming under the foam or in the foam at least one elongated or surface diffusion zone, configured to diffuse light in the direction of one or more portion of the skin.

Spanish patent ES2651263T3 describes an interior component made of a laminated composite material, and more specifically a technique for even further improving the feel of an interior component made of a laminated composite material to which damping characteristics are imparted by means of the elastic deformation of multiple protrusions. The small multiple protuberances have an elongated shape in a planar view and are arranged at locations so as to form the respective sides of each polygon such that the lattice pattern formed by the polygon is formed. Each small protrusion having an elongated shape is easily bent and deformed in the direction perpendicular to the longitudinal direction and is hard to bend and deform in the longitudinal direction. Therefore, the deformation shape at the time that each small protuberance is elastically deformed becomes stable, and variations in feeling at the time when the small protuberances are pressed with a finger or a hand are suppressed. Therefore, an appropriate rigid feeling is obtained because the small protrusions support one another. However, patent ES2651263T3 does not contemplate the existence of any light element for lighting the protuberances and thereby conferring enhanced aesthetics to same.

It is, therefore, necessary to offer an alternative to the State of the Art which covers the voids in same, providing an interior liner of a vehicle provided with a series of protuberances that can be lighted having a decorative function and a high-quality finish, while having at the same time a small volume, a small quantity of components with respect to known alternatives, and it can be manufactured in an easy and cost-effective manner.

### Description of the invention

The first object of the present invention is to provide a backlit interior product of a vehicle, wherein the backlit interior product is formed by a plurality of components with a high aesthetic quality, and it overcomes the aforementioned drawbacks, presenting the advantages described below.

Preferably, this interior product is part of a specific region of the door panel, such as the insert with a soft finish, which is the region above the armrest of the door, although it can also be part of a dashboard, a central console or an armrest.

According to a first aspect, the present invention provides a backlit, multicomponent interior product of a vehicle, comprising in a known manner:
- a structural element, configured for conferring rigidity to the interior product,
- an outer covering placed on top of the structural element and arranged in the outer part proximal to the interior compartment of the vehicle, wherein the covering is configured for providing surface quality,
- at least one point-source embossment protruding from said structural element and extending towards the interior compartment of the vehicle, with said at least one point-source embossment being located between the structural element and the outer covering,
- at least one lighting assembly, arranged in the internal part of the interior component, wherein the at least one lighting assembly comprises a light emitter and a light emitter support,

wherein the at least one point-source embossment is made of a light transmitting material, such that it is configured for receiving the light beams emitted by the at least one light emitter and directing them towards the outer covering, and
wherein the outer covering is made, at least in the region facing the at least one point-source embossment, of a transparent or translucent material to allow the passage of the light beams from the at least one point-source embossment towards the interior compartment of the vehicle.

Structural element is understood to mean a component having certain rigidity, particularly conceived for supporting the interior product, attaching the interior product to other appended components and attaching other components to the interior product. Depending on the finish, said structural component can have a finish that is soft to the touch, without losing the mentioned rigidity properties.

Unlike the backlit interior products used in vehicles already known in the State of the Art, in the one proposed by the present invention, characteristically, each point-source embossment is manufactured from a soft, deformable material configured for being elastically deformed due to pressure exerted on the outer surface of said at least one point-source embossment.

Internal part of the interior product where the at least one lighting assembly is located in the present invention is understood to mean that part opposite the external part. In the event that the product is installed in the interior of a vehicle, the external part corresponds to the part of the side of the compartment of the vehicle, whereas the internal part corresponds to the opposite part closest to the body of the vehicle.

The present invention seeks to generate a surface backlighting in one or more specific areas of the door panel. It therefore seeks to generate an appearance of a plurality of point-source embossments or protuberances in a specific region of the interior that is visible to the user of the vehicle, which are to be lit in the form of points. Thus, when the at least one lighting assembly is switched off, the observer may see a surface finish formed by a plurality of embossments or protuberances, separated from one another, with said embossments or protuberances having any desired geometry. Moreover, when the at least one lighting assembly is switched on, the observer may see said plurality of backlit embossments or protuberances, forming an array of lit elements separated from one another. Regardless of the state of the at least one lighting assembly, one objective of the present invention is, despite the point-source protrusions or edges on the surfaces contacting the user's skin, to achieve that the user is not at all harmed, neither due to contact with same during normal use nor due to sudden contact during an impact or crash involving the vehicle.

In particular reference to the outer covering, said outer covering is the outermost element of the product of the invention and is configured for conferring to the product a high surface quality both touch-wise and visually for an observer. This outer covering is made of one or a combination of the following materials:
- Translucent fabric, and/or
- Sheet of PVC, TPO or similar translucent material that is masked to control light outlet regions, and/or
- Sheet of PVC, TPO or similar material perforated in light outlet regions.

In the event that the material of the outer covering covers a region where there is a point-source embossment under same, since the outer covering is formed by a transparent or translucent material, it allows the light generated by each light emitter to be correctly transmitted towards the outside of the product, and each embossment is thereby lit as a point-source from its back part, i.e., backlit. The user thereby perceives the different lit embossments from the outside. On an optical level, as mentioned above, the outer covering can be transparent or translucent. The outer covering will preferably be translucent to prevent the user from being able to see the interior parts of the product and assure a proper appearance when the at least one lighting assembly is switched off. According to a preferred mode, in which the outer covering is translucent, it is a body having a dark colour which allows the passage of light.

In particular reference to the at least one point-source embossment, in the present invention it is understood to mean a single point-source embossment, according to some embodiments, or a plurality of point-source embossments, i.e., two or more embossments, according to alternative embodiments. Embossment or protuberance or protrusion are used interchangeably in this specification to refer to an outwardly protruding element with a 3D geometry.

Preferably, the at least one point-source embossment is a small protruding protuberance arranged in a specific position.

In the embodiments in which there is a single point-source embossment, the optical effect of the existence of different protuberances separated from one another on the outer surface of said point-source embossment will be created.

And in embodiments wherein there is a plurality of point-source embossments, these embossments are arranged in specific positions separated from one another on the outer surface of the structural element, such that there will be no connection between the different embossments on the outer surface. This spatial arrangement of the plurality of point-source embossments pursues the visual effect of achieving lighting only at the separate points where there is an embossment.

The technical effect achieved is the point-source lighting of embossments or protuberances which are deformable to the touch in lined parts, i.e., in regions which are soft, such as the region of the insert of the door panel or else the armrest, which are both soft.

Reference to a soft material means a material that is soft to the touch of a user. The fact that it is soft does not just affect the aesthetic part. Said region has the soft finish given the possibility of there being direct contact with some part of the human body, such as the elbow of a user, for example, during normal use of said components. This specific solution seeks to generate this lit finish in a soft region which also has protruding embossments that are soft so that, in the event of an impact or direct contact with the user, they do not hurt or bother the user.

Non-limiting examples of possible materials to be used to manufacture the at least one point-source embossment with soft and at the same time light conducting properties include: urethanes, silicone, thermoplastic polyurethane (TPU) or other similar optical grade flexible materials.

As for the possible geometries of these embossments or protuberances, one possible geometry is a triangular-based pyramid, although any type of pyramid base is perfectly valid. They can also be semispherical type structures and also have some irregular and non-symmetrical shapes. Different geometries for different groups of embossments or different sizes of one same geometry can also be included in one same product. The geometry of these embossments performs a primarily aesthetic function for the product.

The point-source embossments behave like a light guide. The purpose of a light guide is to transmit the light beams generated by one or more light emitters or sources and emit them in a specific direction outside of the light guide. An observer will only see the region of the point-source embossment being lit.

Depending on the case and specific needs, there can be a plurality of optical light receiving structures arranged at different points of the point-source embossment, and more specifically on the side thereof proximal to the light emitter, i.e., in the receiving region for receiving the light beams generated by the light emitter. The function of said optics is to receive and distribute the light beams throughout the interior of the embossment in order to guide the light beams inside the forming material and filling the entire interior volume of the point-source embossment with light as appropriate (aligned or scattered). The light beams come out of the respective embossments through the outer faces.

In the event that an embossment is designed which is overmoulded onto the lighting assembly, it is not possible to create optical structures in this region, since the injected gummy liquid material of the embossment occupies all the available space.

By way of non-limiting example, for the light inlet surface of the at least one point-source embossment, it is possible to choose from Fresnel or collimator type light receiving optical structures, i.e., they direct the light beams parallel to one another; or in contrast a type of optics which allow light beams to be randomly scattered in the material of the point-source embossments.

In a possible mode of the invention, the backlit interior product of a vehicle may additionally comprise a foam layer arranged covering the outer surface of the structural element and the at least one point-source embossment, wherein this foam layer comprises a constant thickness in the region placed on top of the structural element and the region placed on top of the at least one point-source embossment, and wherein the foam layer is made, at least in the region facing the at least one point-source embossment, of a transparent or translucent material to allow the passage of light beams from the at least one point-source embossment towards the outer covering. Advantageously, this foam layer (also referred to as foaming) makes the fabric or PVC of the outer covering more or less soft. The main function of this foam layer is to adapt the response to the touch of the product to the needs or requirements thereof.

As regards the material of the foam layer, it is a porous material, so in general terms it allows the passage of light. By way of non-limiting example, PU-Ether can be used. Advantageously, a material which has certain transparency or translucence properties will furthermore be used to increase the optical efficiency of the assembly.

In particular reference to the structural element, corresponding to the element arranged in the innermost part of the product, said element serves as a structural support for, in addition to the at least one point-source embossment, the lighting components and other components of the door or of the component in question, such as a dashboard or a console.

According to particular embodiments, the interior product comprises a plurality of point-source embossments, wherein the embossments of the plurality of point-source embossments are arranged separated from one another on the outer surface of the structural element. Furthermore, the structural element comprises a plurality of holes, wherein each of the plurality of point-source embossments is arranged at least partially inserted in one of these respective holes. As regards these holes, by way of non-limiting example, they can be comprised between 3 mm and 10 mm in diameter if they are holes having a round base. If they have a square base, they have a similar range of magnitude.

The structural element is also preferably manufactured from a thermoinjectable or thermoformable material. Possible examples of each type of material can be: ABS, PP (as thermoinjectable materials) and polymer resin-based pressed fibres (as thermoformable materials).

In a first embodiment of the invention, which comprises a plurality of point-source embossments, the structural element comprises a plurality of holes, wherein each of the plurality of point-source embossments is arranged at least partially inserted in one of these respective holes; and the product further comprises a plurality of lighting assemblies, wherein each lighting assembly is linked to a respective point-source embossment, wherein the at least one light emitter of each of the plurality of lighting assemblies is arranged partially inserted in a respective hole of the structural element, emitting the light beams towards the outer covering through the inside of the respective hole. A high lighting intensity of each of the plurality of point-source embossments which can be readily perceived by the user is thereby achieved.

In said first embodiment, it is noted that the light emitters are located in respective holes or perforations in the structural element so that, by placing the light emitter below a material that protects it (structural element), it is protected against possible impacts that may be sustained and at the same time allows the passage of light through said hole.

In a second embodiment of the invention, which comprises a plurality of point-source embossments, the structural element comprises a plurality of holes, wherein each of the plurality of point-source embossments is arranged at least partially inserted in one of these respective holes; and the product further comprises a plurality of lighting assemblies, wherein each lighting assembly is linked to a respective point-source embossment, wherein each point-source embossment goes through a respective hole of the structural element, wherein said point-source embossment extends on the inner surface of the structural element in a direction substantially parallel to said structural element, wherein said point-source embossment is configured for receiving the light beams emitted by the respective light emitter in a direction substantially parallel to the structural element, for transmitting the light beams through the inside of the hole, and for directing said light beams towards the outer covering. Greater homogeneity is achieved since the light emitters have a light emission direction different from the light extraction direction of the interior product. Optical structures which facilitate guiding the light beams in the material of the point-source embossment towards the outlet surface can be arranged.

Both in the first embodiment and in the second embodiment, each point-source embossment comprises an associated optical structure on the light receiving surface, wherein said optical structure is configured for directing the light beams emitted by the at least one light emitter towards the inside of the point-source embossment. They can be light beam scattering or collimator type optical structures. This is only possible in cases where there is no overmoulding.

In a third embodiment of the invention, which comprises a plurality of point-source embossments, the structural element comprises a plurality of holes, wherein the plurality of point-source embossments go through the plurality of respective holes of the structural element, from the outer surface of the structural element to the inner surface, with the plurality of point-source embossments being connected to one another on the inner surface of the structural element forming a single component, wherein at least one lighting assembly is arranged adjacent to said inner surface of the structural element, wherein the plurality of point-source embossments are configured for receiving the light generated by the at least one light emitter in said inner region, transmitting said light between each of the plurality of point-source embossments and directing said light towards the outer covering.

In said third embodiment, a variant that considerably reduces the number of components needed and simplifies the process of assembling same is achieved. A single structural element and a single soft component will be needed to generate the plurality of point-source embossments on the outer surface. Likewise, one same visual effect is achieved with a smaller number of lighting components since the light introduced in the common area of the soft material is evenly distributed before being guided towards the corresponding point-source embossment and the outer covering.

According to a fourth embodiment, the interior product comprises a single point-source embossment protruding from the structural element, wherein the structural element comprises a single hole, wherein the point-source embossment is arranged at least partially inserted in the hole of the structural element, wherein at least one lighting assembly is arranged adjacent to the inner surface of the structural element, wherein the point-source embossment is configured for receiving the light generated by the at least one light emitter in said inner region, transmitting said light through the point-source embossment and directing said light towards the outer covering. The outer surface of the point-source embossment comprises a plurality of recesses and protrusions for the purpose of generating a surface finish which comprises a plurality of point-source protuberances.

According to said embodiment, a similar surface finish is achieved through a single soft material and a suitable surface finish on its outer surface. Thus, when the at least one lighting assembly is switched off, the observer may see a surface finish formed by a plurality of embossments or protuberances, separated from one another, with said embossments or protuberances having any desired geometry. Moreover, when the at least one lighting assembly is switched on, the observer may see said plurality of backlit embossments or protuberances, forming an array of lit elements separated from one another.

According to a particular embodiment of said embodiment, the interior product comprises a plurality of optical structures, with the plurality of optical structures being arranged separated from one another on the outer surface of the point-source embossment, wherein each optical structure of the plurality of optical structures is configured for extracting light from the point-source embossment generating certain light extraction areas for extracting light towards the outer covering. Different light extraction regions are thereby separated from one another. Preferably, each optical structure is arranged in a protrusion region of the surface finish of the outer surface. In contrast, the recess regions of the surface finish of the outer surface do not comprise optical structures.

According to an alternative or complementary embodiment relative to the preceding particular embodiment, the interior product comprises a mask arranged between the point-source embossment and the outer covering, wherein the mask is made of an opaque material, wherein the mask comprises a plurality of light transmission regions separated from one another and configured for transmitting the light extracted from the point-source embossment, generating certain light extraction areas for extracting light towards the outer covering. Different light extraction regions are thereby separated from one another. Preferably, each light transmission region is arranged in a protrusion region of the surface finish of the outer surface. In contrast, the recess regions of the surface finish of the outer surface correspond with opaque regions of the mask.

In the embodiments in which the interior product comprises a foam layer, the mask can be arranged adjacent both to the inner surface and to the outer surface of the foam layer, preferably being adjacent to the outer covering, allowing a better definition of the lit point-source regions in said outer covering.

For the first and fourth embodiments of the invention described above, the plurality of point-source embossments can be overmoulded onto the at least one lighting assembly. In this specific case, the point-source embossment can completely envelope the light emitter. In this case where there is overmoulding, light receiving optical structures cannot be generated. The material covers the entire light emitter and the light emitter support, so optical structures cannot be generated between both components. Said assembly must be subsequently attached to the structural element by means of any of the systems known in the state of the art, such as gluing or clipping.

In all of the first, second, third and fourth embodiments described above, the plurality of point-source embossments can be overmoulded onto the structural element, thus obtaining a single component which facilitates the transport and assembly thereof. The lighting assembly must be subsequently attached to the obtained assembly by means of any of the systems known in the state of the art, such as gluing or clipping.

Alternatively, and for any of the embodiments shown, the at least one point-source embossment is obtained by plastic injection moulding. In turn, the structural element is obtained by a separate injection moulding process. Both components are attached to one another by clipping or gluing.

It is noted that in the embodiments in which the at least one point-source embossment is attached to the structural element by mechanical means, any one end of the point-source embossment must be configured to bend during the step of assembling and introducing one end thereof in the hole of the structural element. Said end is configured for recovering its initial geometry, thus ensuring the correct assembly between both parts.

In particular reference to the light emitter support, said support is arranged at the base of the light emitters. Said support is a printed circuit board (PCB) common to some or to all of the light emitters, or alternatively an individual support for each light emitter.

In the event that there is arranged a printed circuit board (PCB), said board is flat and the plurality of light emitters are arranged on this PCB board, evenly distributed, following a specific pattern, or else distributed in a completely random manner on said PCB board.

The PCB board is operatively coupled with a controller having a control circuit which includes a driver circuit of the light emitter in order to simultaneously or sequentially control the activation and deactivation of the different light emitters. The PCB can be any type of circuit board, including but not limited to any flexible PCB and/or rigid PCB. The controller can be arranged inside or outside of the lighting assembly.

In particular reference to the light emitters, each light emitter preferably emits radiation visible to the human eye, with each light source being of one colour, which can be the same as or different from the other light emitters arranged in other embossments. Regarding the colour of the light emitter, it can be any colour. By way of example, a light emitter is configured for emitting light beams in a 120° cone. The size of the light emitters is preferably: 3 mm, 5 mm, 10 mm or 20 mm. The preferred option is 3 mm.

Each light emitter is controllable between a first off state and a second on state. The different light emitters can be switched on progressively, generating filling or emptying effects for the external user. All the light emitters can also be switched on simultaneously.

Each light emitter can include any known form of light source or emitter. A light-emitting diode (LED) is chosen as the preferred light emitter, although any other form of lighting configured to emit light can be used, such as fluorescent lighting, organic LEDs (OLED), polymer LEDs (PLED) or solid-state lighting.

In addition to the light emitters and the light emitter support, there is also wiring for the lighting components.

The second object of the present invention is to provide a door panel of a vehicle which incorporates a backlit interior product defined in claim 1. Namely, the interior product can be part of a specific region of the door panel, such as the insert having a soft or padded surface finish, which is the region above the armrest of the door, although it could also be applied to the armrest itself.

The smaller volume occupied by this interior product, as well as the smaller quantity of components (when compared with other solutions known in the State of the Art), favour the integration thereof in a door panel.

Three possible manufacturing processes for manufacturing the multicomponent product of the present invention suitable for specific embodiments of the invention described above are described in detail below:
1. Manufacturing process no. 1, which is suitable for manufacturing the first and fourth embodiment (without the possibility of arranging optics in the light inlet area), comprising the ollowing steps:
   a) Obtaining the structural element through an injection moulding process.
   b) Placing the light emitter and the light emitter support in a cavity of the injection mould wherein the structural element was initially obtained, onto which the gummy material of the embossment is overmoulded, covering the light emitter and the light emitter support. The lighting plus embossment assembly is thus obtained.
   c) Clipping the previous assembly from step b to the structural element in the event that said previous assembly has been obtained in mould separate from the mould of the structural element.
2. Manufacturing process no. 2, which is suitable for manufacturing the first, second, third or fourth embodiment, comprising the following steps:
   a) Obtaining the structural element through an injection moulding process.
   b) Injecting the gummy material of the embossment with or without integrated optics in one same mould onto the structural element. It is, therefore, a process for overmoulding the gummy material of the embossment onto the structural element.
   c) Clipping the light emitting assembly plus the light emitter support to the structural element assembly plus the embossments.
3. Manufacturing process no. 3, which is suitable for manufacturing the first, second or fourth embodiment, comprising the following steps:
   a) Obtaining the structural element through an injection moulding process.
   b) Obtaining the embossment(s) (with or without integrated optics) by an injection process for injecting the gummy material of the embossment into a separate mould.
   c) Fixing both components (structural element plus the embossments).
   c) Clipping the light emitting assembly plus the light emitter support to the previous assembly (structural element plus the embossments).

In the three possible manufacturing processes described above for the product of the invention, the outer covering is located and fixed by conventional methods, for example, by means of vacuum lining or pressure lining.

These three possible manufacturing processes described above are simple, rapid, cost-effective and effective manufacturing processes for obtaining the interior product object of the present invention.

For a better understanding of what has been stated, drawings are attached wherein, schematically and only as a non-limiting example, practical cases of several exemplary embodiments of the product object of the invention are represented.

### Brief description of the figures

Figure 1 is a perspective view of the interior of a vehicle, where a region of the interior of the vehicle corresponding to the insert of the door panel can be seen.
Figure 2 is a front view of an interior region of the vehicle where a plurality of embossments arranged in different positions can be seen.
Figure 3 is the same front view as Figure 2 where the embossments of the plurality of embossments are lit in the form of points.
Figure 4 is a side cross-sectional view of the first embodiment of the product of the invention.
Figure 5 is a side cross-sectional view of the second embodiment of the product of the invention.
Figure 6 is a side cross-sectional view of the third embodiment of the product of the invention.
Figure 7 is a side cross-sectional view of the fourth embodiment of the product of the invention.

### Description of several exemplary embodiments

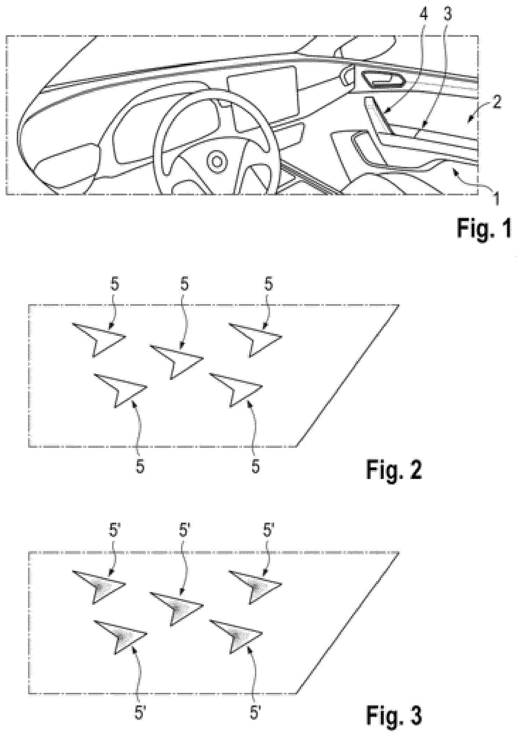

Next, an exemplary embodiment of the backlit interior product of a vehicle of the present invention is described with reference to Figures 1 to 7.

In reference to Figure 1, said figure shows a front region of an interior compartment of a vehicle, where the part of the insert 2 of the door panel 1 on the right side of the vehicle is indicated. As indicated above, the part of the insert 2 is the region above the armrest 3 of the door panel 1, and it is a region that can be contacted by both the elbow and the arm or hand of the user, while trying to find the handle 4 of the door. As a result, the insert 2 has a soft finish to improve its possible direct contact with some part of the human body.

In particular reference to Figures 2 and 3, respective front views of a specific interior region, for example, of a region of the insert 2 of the door panel 1 of the vehicle, are shown. In this region of the insert 2, there can be seen a plurality of embossments 5, namely five embossments 5, distributed in different positions in this region of the insert 2. The spatial distribution of these embossments 5 can be any desired distribution based on each specific design, and it does not condition the invention. The geometry of these embossments 5 can also be any geometry based on each specific design, and it does not condition the invention. In this specific case, these embossments 5 protrude from a base surface into the compartment. According to the example shown, they all have one same pyramid-shaped geometry with the tip point-source outwards and with a regular triangular base. As can be observed, the embossments 5 are separated from one another, i.e., there is a transition region or a region without embossments 5 between them which belongs to the base surface. In particular reference to Figure 3, these same embossments 5' are lit from the rear part of each embossment 5 by means of a representation of points, such that a user located in the compartment of the vehicle perceives said point-source lighting of all the embossments 5. The lighting is produced such that only the embossments 5 are lit as a point-source, without the base surface or transition region between the embossments 5 being lit.

A finish or appearance in which, with the lighting modules switched off, the user perceives, both visually and at the haptic level, embossments 5 which protrude from the insert 2 of the door panel 1 is thereby achieved. In contrast, when the lighting modules are switched on, particularly in conditions of low ambient light, the user perceives, both visually and at the haptic level, lit embossments 5' which protrude from the insert 2 of the door panel 1.

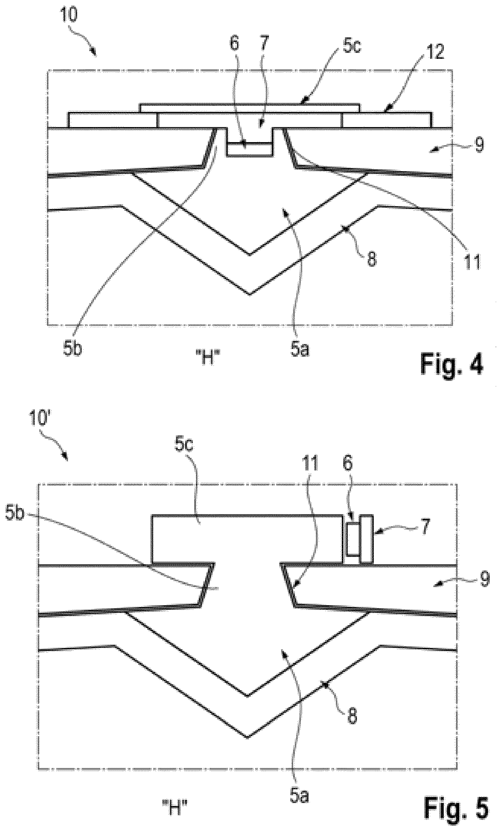

In relation to the different embodiments set forth in Figures 4 to 7, said figures show a cross-sectional view along a horizontal plane of the insert 2 of the door panel 1. The internal structure of the door panel 1 is made up of a structural element 9, which is made of a rigid plastic, which confers rigidity to said door panel 1. This structural element 9 comprises at least one through hole 11, which allows an internal region of the door panel to communicate with an external region. The assembly door panel 1 is covered by an outer covering 8, which confers suitable quality and visual appearance. For the purpose of providing certain quality and comfort to the touch, between the structural element 9 and the outer covering 8 there can be arranged a foam layer, providing the door panel 1 with a finish that is soft to the touch. As a particular element of the present invention, the door panel 1 is additionally made up of at least one point-source embossment 5, which is at least partially introduced in the respective hole 11 of the structural element 9. Said point-source embossment 5 is made of a material that is soft and elastically deformable in the event of a force being applied, allowing the geometric structures shown in Figures 2 and 3 to be generated. The point-source embossment 5, the foam layer and the outer covering 8 comprise properties for achieving the point-source lighting of the embossment 5 of the insert 2.

In particular reference to Figure 4, said figure represents a laterally sectioned view of the first embodiment of the backlit interior product 10 of a vehicle of the invention. Said product is formed by the following components: a structural element 9; an outer covering 8 placed on top of the structural element 9 and arranged in the outer part proximal to the interior compartment of the vehicle; a point-source embossment 5 protruding from said structural element 9 and extending towards the interior compartment "H" of the vehicle, with the point-source embossment 5 being located between the structural element 9 and the outer covering 8; and a lighting assembly formed by a light emitter 6 and a light emitter support 7 arranged in the innermost part of the interior product 10, directly facing a part of the embossment 5. As can be observed in this Figure 4, the light emitter 6 and the light emitter support 7 are embedded in the embossment 5, and a rear portion 5c of the embossment 5 is arranged behind the light emitter support 7. The wiring 12, which is arranged on both sides of the light emitter support 7, is also represented in said Figure 4. According to the particular embodiment shown, the embossment 5 is overmoulded onto the lighting assembly formed by a light emitter 6 and a light emitter support 7, such that said components are completely covered by the soft material of the embossment 5, with the wiring 12 for supplying power to the lighting assembly being left uncovered.

The embossment 5 has a pyramid-shaped front portion 5a which protrudes from the structural element 9, an intermediate portion 5b which is at least partially introduced in the hole 11 of the structural element 9, and a rear portion 5c which is facing the lighting assembly for receiving the light beams emitted by same. The operation of the backlit interior product 10 is such that the light beams (not shown in Figure 4) emitted by the light emitter 6 are directed towards the outer covering 8, passing through the point-source embossment 5 as they are made of a light transmitting material and also passing through the outer covering 8 as at least the region of the outer covering 8 facing the point-source embossment 5 is made of a transparent or translucent material. Furthermore, said light beams are also transmitted by the foam layer, which is made of a transparent or translucent material, allowing the passage of the light beams towards the outer covering 8.

Figure 4 shows a single point-source embossment 5, but it is understood that there can be a plurality of said embossments. Thus, each embossment 5 is associated with a lighting assembly. Namely, the light beams generated by each light emitter 6 are received by the intermediate portion 5b, transmitted in the material forming said point-source embossment 5 and emitted by the front outlet portion 5a. This front or outlet portion 5a may comprise optics to improve guidance and the light beam extraction regions of the point-source embossment 5.

In particular reference to Figure 5, said figure represents a laterally sectioned view of the second embodiment of the backlit interior product 10' of a vehicle of the invention. It differs from the first embodiment of the invention described above in that the lighting assembly formed by a light emitter 6 and a light emitter support 7 are arranged in the internal region of the structural element 9 and emit in a direction perpendicular to the outlet direction of the light beams towards the outside. A through hole 11 in the structural element 9, in this case having a trapezoid-shaped cross-section, is also provided in this case so that an intermediate portion of the embossment 5b can be inserted therein. The working of this second embodiment is very similar to the working of the first embodiment, differing only in that the light beams (not shown in Figure 5) emitted by the light emitter 6 are directed from the side towards the point-source embossment 5, namely, they are received by the rear portion 5c of the embossment 5. This rear portion 5C redirects the light beams towards the intermediate portion 5b to finally transmit the light beams towards the front portion 5a, for its outlet towards the outer covering 8 to then reach the region of the compartment "H" of the vehicle.

In this embodiment, there is a single point-source embossment 5 and an associated lighting assembly. The rear portion 5c of the soft material forming the embossment 5 can be provided with optics, particularly in the light beam receiving region. These optics can be of the type, structures and dimensions needed to improve the optical behaviour of the soft material, particularly seeking a correct scattering of the light beams in the embossment 5, lighting up all the regions of the front portion 5a. Additionally, the rear portion 5c may comprise structures for redirecting the light beams towards said front portion 5a, particularly optics which cause a change in direction of substantially 90° in the light beams generated by the lighting assembly. These optics would be arranged on the rear surface of said rear portion 5c.

The product shown in said Figure 5 can be obtained by means of overmoulding the gummy material forming the embossment 5 onto the structural element 9 that has already been injected. Alternatively, in the event of obtaining both components by separate injections of plastic, the structure of the embossment 5 allows the fixing thereof by clipping. Thus, both the rear portion 5c and the front portion 5a comprise an extension greater than that of the hole 11. Thus, one of the two portions can be introduced through the hole 11 by deformation thereof, recovering its initial position once the hole 11 has been surpassed, as a result being made of an elastically deformable material. The embossment 5 is correctly retained in the hole 11 of the structural element 9.

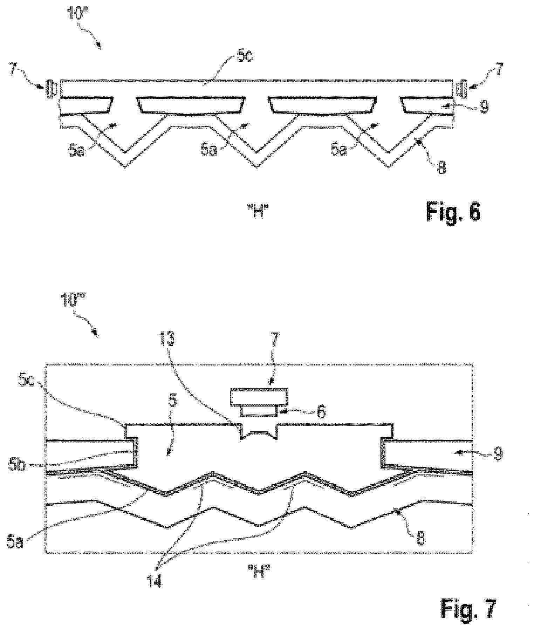

In particular reference to Figure 6, said figure represents a laterally sectioned view of the third embodiment of the backlit interior product 10" of a vehicle of the invention. It differs from the second embodiment of Figure 5 in that there are three embossments 5 separated from one another which share one same rear portion 5c. Furthermore, in this case there are two different lighting assemblies 6, 7 placed one on each side of the common rear portion 5c. Respective holes 11 are provided in the structural element 9 for housing respective intermediate portions 5b of each embossment 5. The outer covering 8, which has a constant thickness, in this case has respective regions covering each front portion 5a and intermediate regions between the embossments.

In this third exemplary embodiment, it can be observed that each embossment 5 no longer has its own associated lighting assembly, but rather the light generated by the at least one lighting assembly, in this case two, is received in the rear portion 5c and evenly distributed through the interior of said rear portion 5c. Like in the second exemplary embodiment, the rear portion 5c may comprise optical structures to improve the receiving and directing of light beams. Likewise, the rear surface of the rear portion 5c may comprise optical structures for redirecting the light beams towards each intermediate portion 5b. It can be observed that said soft material forming all the point-source embossments 5 is configured for internally distributing light and allowing said light to reach the front portions 5a.

The process of obtaining the product is similar to that set forth in Figure 6, with the difference that in the case of obtaining same by means of independent injections of the embossment 5 and of the structural element 9, the assembly direction can only be in the outlet direction of the light beams from the product. Thus, the front portions 5a of the plurality of point-source embossments 5 will be configured for being deformed by pressure as they pass through the respective hole 11, recovering their original geometry and thus retaining the component in the structural element 9.

In particular reference to Figure 7, said figure represents a laterally sectioned view of the fourth embodiment of the backlit interior product 10‴ of a vehicle of the invention. It differs from the first embodiment of Figure 5 in that the embossment 5 has a larger width. Thus, the objective of said fourth embodiment is to achieve generating a plurality of protuberances or protrusions, i.e., generating the effect of there being a plurality of point-source embossments 5 when it is actually one same component. To that end, the front portion 5a has three protruding protuberances and two depressions instead of a single embossment. The outer surface of this front portion 5a of the point-source embossment 5 can be formed by several alternating depressions and protrusions, wherein these depressions and protrusions have a pointed or rounded end. The geometry of each alternating depressions and protrusions does not have to be the same. It will depend on the aesthetics of the embossments to be obtained in each specific case of the interior region of the vehicle. In this case, three protruding protuberances and two pointed depressions have been represented. This outer surface of the front portion 5a of the point-source embossment 5 can have any shape, for example, it can have a geometry which generates depressions and protrusions having the same geometry, as in the case of this Figure 7, to simulate the plurality of point-source embossments of other embodiments.

The structural element 9 comprises a single through hole 11 having a larger width, occupied entirely by the embossment 5. This last Figure 7 also incorporates a light inlet optic 13 in the back base of the rear portion 5c, namely, in the region facing the light emitter 6, for the purpose of evenly distributing the received light beams in the material forming the embossment 5.

In turn, and so that an occupant of the vehicle can see different, separately lit point-source embossments, light can be extracted across the entire surface of the front portion 5a or, in contrast, only in the regions where there is a protuberance. Thus, said embossment 5 may comprise three regions of light outlet optical structures separated from one another. These light outlet optical structures are arranged in a region of each of the protuberances, namely their surface finish, where light beams are desired to be extracted towards the outer covering 8. Alternatively, a mask 14 can be provided arranged between the embossment 5 and the outer covering 8. This mask 14 comprises a plurality of opaque areas, represented by means of lines at the outer base of each of the embossments, which prevent the outlet of the light beams, allowing non-lit regions to be generated. Furthermore, said mask 14 comprises a plurality of transparent regions, not represented in the figure, which allow the passage of light beams from the front portion 5a to the outer covering 8.

As regards the assembly of said fourth embodiment, it comprises the alternatives shown according to the second embodiment.

Thus, the different structures shown in the different embodiments allow point-source embossments 5 which can be backlit to be obtained, such that the user observes different lit regions of the door panel 1. Furthermore, whether the lighting assemblies are switched on or switched off, these embossments can be perceived both visually, due to the finish in 3D, and to the touch. Lastly, in case of an impact, particularly a side impact in which the door can collapse and be deformed, occupying interior space of the compartment of the vehicle, said embossments 5 are deformable, due to their soft and elastically deformable material composition, which does not result in harm for the occupant of the vehicle in case of direct contact between said embossments 5 and the skin of the occupant. In any of the proposed embodiments, there will not be any contact between the occupant and hard elements of the components which are part of the lighting assembly, with these components being located in regions protected by the deformable embossments 5 or in regions where direct contact does not occur.

## Claims

1. A backlit interior product (10, 10', 10", 10"') for a vehicle, comprising:
- a structural element (9), configured for conferring rigidity to the interior product.
- an outer covering (8) placed on top of the structural element and arranged in the outer part proximal to the interior compartment of the vehicle, wherein the covering is configured for providing surface quality.
- at least one point-source embossment (5) protruding from said structural element and extending towards the interior compartment of the vehicle, with said at least one point-source embossment (5) being located between the structural element (9) and the outer covering (8),
- at least one lighting assembly, arranged in the internal part of the interior product (10), wherein the at least one lighting assembly comprises a light emitter (6) and a light emitter support (7),
wherein the at least one point-source embossment (5) is made of a light transmitting material, such that it is configured for receiving the light beams emitted by the at least one light emitter (6) and directing them towards the outer covering (8), and
wherein the outer covering (8) is made, at least in the region facing the at least one point-source embossment (5), of a transparent or translucent material to allow the passage of the light beams from the at least one point-source embossment (5) towards the interior compartment of the vehicle,
**characterised in that** the at least one point-source embossment (5) is manufactured from a soft, deformable material configured for being elastically deformed due to pressure exerted on the outer surface of said at least one point-source embossment (5).

2. The backlit interior product (10, 10', 10", 10‴) of a vehicle according to claim 1, further comprising a foam layer arranged covering the outer surface of the structural element (9) and the at least one point-source embossment (5), wherein the foam layer comprises a constant thickness, and wherein the foam layer is made, at least in the region facing the at least one point-source embossment (5), of a transparent or translucent material to allow the passage of light beams from the at least one point-source embossment towards the outer covering (8).

3. The backlit interior product (10, 10', 10", 10"') of a vehicle according to any of the preceding claims, comprising a plurality of point-source embossments (5) arranged separated from one another on the outer surface of the structural element (9), and wherein the structural element (9) comprises a plurality of holes (11), wherein the plurality of point-source embossments (5) are each arranged at least partially inserted in a respective hole (11) of the structural element (9).

4. The backlit interior product (10, 10', 10", 10"') of a vehicle according to claim 3, comprising a plurality of lighting assemblies, wherein each lighting assembly is linked to a respective point-source embossment, wherein the at least one light emitter of each of the plurality of lighting assemblies is arranged partially inserted in a respective hole of the structural element, emitting the light beams towards the outer covering through the inside of the respective hole.

5. The backlit interior product (10, 10', 10", 10"') of a vehicle according to claim 3, comprising a plurality of lighting assemblies, wherein each lighting assembly is linked to a respective point-source embossment, wherein each point-source embossment goes through a respective hole of the structural element, wherein said point-source embossment extends on the inner surface of the structural element in a direction substantially parallel to said structural element, wherein said point-source embossment is configured for receiving the light beams emitted by the respective light emitter in a direction substantially parallel to the structural element, for transmitting the light beams through the inside of the hole, and for directing said light beams towards the outer covering.

6. The backlit interior product (10, 10', 10", 10‴) of a vehicle according to claim 3, wherein the plurality of point-source embossments go through the plurality of respective holes of the structural element, with the plurality of point-source embossments being connected to one another on the inner surface of the structural element forming a single component, wherein at least one lighting assembly is arranged adjacent to said inner surface of the structural element, wherein the plurality of point-source embossments are configured for receiving the light generated by the at least one light emitter in said inner region, transmitting said light between each of the plurality of point-source embossments and directing said light towards the outer covering.

7. The backlit interior product (10, 10', 10", 10‴) of a vehicle according to any of claims 1 or 2, comprising a single point-source embossment protruding from the structural element, wherein the structural element comprises a single hole, wherein the point-source embossment is arranged at least partially inserted in the hole of the structural element, wherein at least one lighting assembly is arranged adjacent to the inner surface of the structural element, wherein the point-source embossment is configured for receiving the light generated by the at least one light emitter in said inner region, transmitting said light through the point-source embossment and directing said light towards the outer covering.

8. The backlit interior product (10, 10', 10", 10"') of a vehicle according to claim 7, comprising a plurality of optical structures, with the plurality of optical structures being arranged separated from one another on the outer surface of the point-source embossment, wherein each optical structure of the plurality of optical structures is configured for extracting light from the point-source embossment generating certain light extraction areas for extracting light towards the outer covering.

9. The backlit interior product (10, 10', 10", 10‴) of a vehicle according to any of claims 7 or 8, comprising a mask arranged between the point-source embossment and the outer covering, wherein the mask is made of an opaque material, wherein the mask comprises a plurality of light transmission regions separated from one another and configured for transmitting the light extracted from the point-source embossment, generating certain light extraction areas for extracting light towards the outer covering.

10. The backlit interior product (10, 10', 10", 10"') of a vehicle according to any of the preceding claims, wherein the at least one point-source embossment comprises an optical structure on the light receiving surface, wherein said optical structure is configured for directing the light beams emitted by the at least one light emitter towards the inside of the point-source embossment.

11. The backlit interior product (10, 10', 10", 10‴) of a vehicle according to any of claims 4, 7, 8 or 9, wherein the at least one point-source embossment is overmoulded onto the at least one lighting assembly.

12. The backlit interior product (10, 10', 10", 10‴) of a vehicle according to any of claims 5, 6, 7, 8 or 9, wherein the at least one point-source embossment is overmoulded onto the structural element.

13. The backlit interior product (10, 10', 10", 10"') of a vehicle according to any of the preceding claims, wherein the light emitter support arranged at the base of the light emitters is a printed circuit board (PCB) common to some or to all of the light emitters or else an individual support for each light emitter.

14. A door panel of a vehicle, comprising the backlit interior product (10, 10', 10", 10"') defined in claim 1.

## Patentansprüche

1. Hinterleuchtetes Innenraumprodukt (10, 10', 10", 10"') für ein Fahrzeug, umfassend:
- ein Strukturelement (9), das zum Verleihen von Steifigkeit für den Innenraum konfiguriert ist,
- eine Außenabdeckung (8), die oben auf dem Strukturelement platziert ist und im Außenteil proximal zum Innenraum des Fahrzeugs angeordnet ist, wobei die Abdeckung zum Bereitstellen von Oberflächenqualität konfiguriert ist,
- mindestens eine Punktquellenerhebung (5), die von dem Strukturelement hervorspringt und sich zum Innenraum des Fahrzeugs erstreckt, wobei sich die mindestens eine Punktquellenerhebung (5) zwischen dem Strukturelement (9) und der Außenabdeckung (8) befindet,
- mindestens eine Beleuchtungsbaugruppe, die im inneren Teil des Innenraumprodukts (10) angeordnet ist, wobei die mindestens eine Beleuchtungsbaugruppe einen Lichtemitter (6) und einen Lichtemitterträger (7) umfasst,
wobei die mindestens eine Punktquellenerhebung (5) aus einem lichtdurchlässigen Material gefertigt ist, sodass sie zum Empfangen der Lichtstrahlen, die von dem mindestens einen Lichtemitter (6) emittiert werden, und zum Lenken derselben zur Außenabdeckung (8) hin konfiguriert ist, und
wobei die Außenabdeckung (8) mindestens in dem Bereich, der der mindestens einen Punktquellenerhebung (5) zugewandt ist, aus einem transparenten oder durchscheinenden Material gefertigt ist, um den Durchgang der Lichtstrahlen von der mindestens einen Punktquellenerhebung (5) zum Innenraum des Fahrzeugs hin zu ermöglichen,
**dadurch gekennzeichnet, dass** die mindestens eine Punktquellenerhebung (5) aus einem weichen, verformbaren Material hergestellt ist, das konfiguriert ist, um aufgrund von Druck, der auf die Außenoberfläche der mindestens einen Punktquellenerhebung (5) ausgeübt wird, elastisch verformt zu werden.

2. Hinterleuchtetes Innenraumprodukt (10, 10', 10", 10‴) eines Fahrzeugs nach Anspruch 1, das weiter eine Schaumstoffschicht umfasst, die angeordnet ist, um die Außenoberfläche des Strukturelements (9) und die mindestens eine Punktquellenerhebung (5) zu bedecken, wobei die Schaumstoffschicht eine konstante Dicke umfasst, und wobei die Schaumstoffschicht mindestens in dem Bereich, der der mindestens einen Punktquellenerhebung (5) zugewandt ist, aus einem transparenten oder durchscheinenden Material gefertigt ist, um den Durchgang von Lichtstrahlen von der mindestens einen Punktquellenerhebung zur Außenabdeckung (8) hin zu ermöglichen.

3. Hinterleuchtetes Innenraumprodukt (10, 10', 10", 10‴) eines Fahrzeugs nach einem der vorstehenden Ansprüche, das eine Vielzahl von Punktquellenerhebungen (5) umfasst, die getrennt voneinander auf der Außenoberfläche des Strukturelements (9) angeordnet sind, und wobei das Strukturelement (9) eine Vielzahl von Löchern (11) umfasst, wobei die Vielzahl von Punktquellenerhebungen (5) jeweils mindestens teilweise in ein jeweiliges Loch (11) des Strukturelements (9) eingesetzt angeordnet sind.

4. Hinterleuchtetes Innenraumprodukt (10, 10', 10", 10"') eines Fahrzeugs nach Anspruch 3, das eine Vielzahl von Beleuchtungsbaugruppen umfasst, wobei jede Beleuchtungsbaugruppe mit einer jeweiligen Punktquellenerhebung verknüpft ist, wobei der mindestens eine Lichtemitter jeder der Vielzahl von Beleuchtungsbaugruppen teilweise in ein jeweiliges Loch des Strukturelements eingesetzt angeordnet ist, wodurch die Lichtstrahlen durch die Innenseite des jeweiligen Lochs zur Außenabdeckung hin emittiert werden.

5. Hinterleuchtetes Innenraumprodukt (10, 10', 10", 10‴) eines Fahrzeugs nach Anspruch 3, das eine Vielzahl von Beleuchtungsbaugruppen umfasst, wobei jede Beleuchtungsbaugruppe mit einer jeweiligen Punktquellenerhebung verknüpft ist, wobei jede Punktquellenerhebung durch ein jeweiliges Loch des Strukturelements verläuft, wobei sich die Punktquellenerhebung auf der Innenoberfläche des Strukturelements in einer Richtung erstreckt, die im Wesentlichen zu dem Strukturelement parallel ist, wobei die Punktquellenerhebung zum Empfangen der Lichtstrahlen, die von dem jeweiligen Lichtemitter in einer Richtung emittiert werden, die im Wesentlichen zu dem Strukturelement parallel ist, zum Durchlassen der Lichtstrahlen durch die Innenseite des Lochs, und zum Lenken der Lichtstrahlen zur Außenabdeckung hin konfiguriert ist.

6. Hinterleuchtetes Innenraumprodukt (10, 10', 10", 10‴) eines Fahrzeugs nach Anspruch 3, wobei die Vielzahl von Punktquellenerhebungen durch die Vielzahl von jeweiligen Löchern des Strukturelements verlaufen, wobei die Vielzahl von Punktquellenerhebungen auf der Innenoberfläche des Strukturelements miteinander verbunden sind, wodurch eine einzelne Komponente gebildet wird, wobei mindestens eine Beleuchtungsbaugruppe an die Innenoberfläche des Strukturelements angrenzend angeordnet ist, wobei die Vielzahl von Punktquellenerhebungen zum Empfangen des Lichts, das von dem mindestens einen Lichtemitter in dem inneren Bereich erzeugt wird, zum Durchlassen des Lichts zwischen jeder der Vielzahl von Punktquellenerhebungen und zum Lenken des Lichts zur Außenabdeckung hin konfiguriert sind.

7. Hinterleuchtetes Innenraumprodukt (10, 10', 10", 10‴) eines Fahrzeugs nach einem der Ansprüche 1 oder 2, das eine einzelne Punktquellenerhebung umfasst, die von dem Strukturelement vorspringt, wobei das Strukturelement ein einzelnes Loch umfasst, wobei die Punktquellenerhebung mindestens teilweise in das Loch des Strukturelements eingesetzt angeordnet ist, wobei mindestens eine Beleuchtungsbaugruppe an die Innenoberfläche des Strukturelements angrenzend angeordnet ist, wobei die Punktquellenerhebung zum Empfangen des Lichts, das von dem mindestens einen Lichtemitter in dem inneren Bereich erzeugt wird, zum Durchlassen des Lichts durch die Punktquellenerhebung und zum Lenken des Lichts zur Außenabdeckung hin konfiguriert ist.

8. Hinterleuchtetes Innenraumprodukt (10, 10', 10", 10"') eines Fahrzeugs nach Anspruch 7, das eine Vielzahl von optischen Strukturen umfasst, wobei die Vielzahl von optischen Strukturen getrennt voneinander auf der Außenoberfläche der Punktquellenerhebung angeordnet sind, wobei jede optische Struktur der Vielzahl von optischen Strukturen zum Extrahieren von Licht aus der Punktquellenerhebung konfiguriert ist, wodurch gewisse Lichtextraktionsbereiche zum Extrahieren von Licht zur Außenabdeckung hin erzeugt werden.

9. Hinterleuchtetes Innenraumprodukt (10, 10', 10", 10‴) eines Fahrzeugs nach einem der Ansprüche 7 oder 8, das eine Maske umfasst, die zwischen der Punktquellenerhebung und der Außenabdeckung angeordnet ist, wobei die Maske aus einem undurchsichtigen Material gefertigt ist, wobei die Maske eine Vielzahl von Lichtdurchlassbereichen umfasst, die voneinander getrennt sind, und zum Durchlassen des aus der Punktquellenerhebung extrahierten Lichts konfiguriert sind, wodurch gewisse Lichtextraktionsbereiche zum Extrahieren von Licht zur Außenabdeckung hin erzeugt werden.

10. Hinterleuchtetes Innenraumprodukt (10, 10', 10", 10‴) eines Fahrzeugs nach einem der vorstehenden Ansprüche, wobei die mindestens eine Punktquellenerhebung eine optische Struktur auf der Lichtempfangsoberfläche umfasst, wobei die optische Struktur zum Lenken der Lichtstrahlen, die von dem mindestens einen Lichtemitter emittiert werden, zur Innenseite der Punktquellenerhebung hin konfiguriert ist.

11. Hinterleuchtetes Innenraumprodukt (10, 10', 10", 10‴) eines Fahrzeugs nach einem der Ansprüche 4, 7, 8 oder 9, wobei die mindestens eine Punktquellenerhebung auf die mindestens eine Beleuchtungsbaugruppe aufgeformt ist.

12. Hinterleuchtetes Innenraumprodukt (10, 10', 10", 10‴) eines Fahrzeugs nach einem der Ansprüche 5, 6, 7, 8 oder 9, wobei die mindestens eine Punktquellenerhebung auf das Strukturelement aufgeformt ist.

13. Hinterleuchtetes Innenraumprodukt (10, 10', 10", 10‴) eines Fahrzeugs nach einem der vorstehenden Ansprüche, wobei der Lichtemitterträger, der an der Basis der Lichtemitter angeordnet ist, eine gedruckte Leiterplatte (PCB) ist, die einigen oder allen der Lichtemitter gemein ist, oder sonst ein einzelner Träger für jeden Lichtemitter ist.

14. Türverkleidung eines Fahrzeugs, die das hinterleuchtete Innenraumprodukt (10, 10', 10", 10"') nach Anspruch 1 umfasst.

## Revendications

1. Produit intérieur rétroéclairé (10, 10', 10", 10"') pour un véhicule, comprenant :
- un élément structural (9), configuré pour conférer de la rigidité au produit intérieur,
- un revêtement extérieur (8) placé sur l'élément structural et agencé dans la partie extérieure proximale du compartiment intérieur du véhicule, dans lequel le revêtement est configuré pour fournir une qualité de surface,
- au moins un relief à source ponctuelle (5) faisant saillie dudit élément structural et s'étendant vers le compartiment intérieur du véhicule, ledit au moins un relief à source ponctuelle (5) étant situé entre l'élément structural (9) et le revêtement extérieur (8),
- au moins un ensemble éclairage, agencé dans la partie interne du produit intérieur (10), dans lequel le au moins un ensemble éclairage comprend un émetteur de lumière (6) et un support (7) d'émetteur de lumière,
dans lequel le au moins un relief à source ponctuelle (5) est en un matériau transmettant la lumière, de sorte qu'il est configuré pour recevoir les faisceaux de lumière émis par le au moins un émetteur de lumière (6) et les diriger vers le revêtement extérieur (8), et
dans lequel le revêtement extérieur (8) est, au moins dans la région faisant face à l'au moins un relief à source ponctuelle (5), en un matériau transparent ou translucide pour permettre le passage des faisceaux de lumière du au moins un relief à source ponctuelle (5) vers le compartiment intérieur du véhicule,
**caractérisé en ce que** le au moins un relief à source ponctuelle (5) est fabriqué à partir d'un matériau souple et déformable configuré pour être déformé élastiquement en raison de la pression exercée sur la surface extérieure dudit au moins un relief à source ponctuelle (5).

2. Produit intérieur rétroéclairé (10, 10', 10", 10"') d'un véhicule selon la revendication 1, comprenant en outre une couche de mousse agencée de manière à recouvrir la surface extérieure de l'élément structural (9) et le au moins un relief à source ponctuelle (5), dans lequel la couche de mousse comprend une épaisseur constante, et dans lequel la couche de mousse est, au moins dans la région faisant face à l'au moins un relief à source ponctuelle (5), en un matériau transparent ou translucide pour permettre le passage de faisceaux de lumière du au moins un relief à source ponctuelle vers le revêtement extérieur (8).

3. Produit intérieur rétroéclairé (10, 10', 10", 10"') d'un véhicule selon l'une quelconque des revendications précédentes, comprenant une pluralité de reliefs à source ponctuelle (5) agencés séparément les uns des autres sur la surface extérieure de l'élément structural (9), et dans lequel l'élément
structural (9) comprend une pluralité de trous (11), dans lequel la pluralité de reliefs à source ponctuelle (5) sont chacun agencés au moins partiellement inséré dans un trou respectif (11) de l'élément structural (9).

4. Produit intérieur rétroéclairé (10, 10', 10", 10"') d'un véhicule selon la revendication 3, comprenant une pluralité d'ensembles éclairage, dans lequel chaque ensemble éclairage est lié à un relief à source ponctuelle respectif, dans lequel le au moins un émetteur de lumière de chacun de la pluralité d'ensembles éclairage est agencé partiellement inséré dans un trou respectif de l'élément structural, émettant les faisceaux de lumière vers le revêtement extérieur à travers l'intérieur du trou respectif.

5. Produit intérieur rétroéclairé (10, 10', 10", 10‴) d'un véhicule selon la revendication 3, comprenant une pluralité d'ensembles éclairage, dans lequel chaque ensemble éclairage est relié à un relief à source ponctuelle respectif, dans lequel chaque relief à source ponctuelle traverse un trou respectif de l'élément structural, dans lequel ledit relief à source ponctuelle s'étend sur la surface intérieure de l'élément structural dans une direction sensiblement parallèle audit élément structural, dans lequel ledit relief à source ponctuelle est configuré pour recevoir les faisceaux de lumière émis par l'émetteur de lumière respectif dans une direction sensiblement parallèle à l'élément structural, pour transmettre les faisceaux de lumière à travers l'intérieur du trou et pour diriger lesdits faisceaux de lumière vers le revêtement extérieur.

6. Produit intérieur rétroéclairé (10, 10', 10", 10‴) d'un véhicule selon la revendication 3, dans lequel la pluralité de reliefs à source ponctuelle traversent la pluralité de trous respectifs de l'élément structural, la pluralité de reliefs à source ponctuelle étant reliés les uns aux autres sur la surface intérieure de l'élément structural formant un seul composant, dans lequel au moins un ensemble éclairage est agencé de manière adjacente à ladite surface intérieure de l'élément structural, dans lequel la pluralité de reliefs à source ponctuelle sont configurés pour recevoir la lumière générée par le au moins un émetteur de lumière dans ladite région intérieure, transmettre ladite lumière entre chacun de la pluralité de reliefs à source ponctuelle et diriger ladite lumière vers le revêtement extérieur.

7. Produit intérieur rétroéclairé (10, 10', 10", 10"') d'un véhicule selon l'une quelconque des revendications 1 ou 2, comprenant un seul relief à source ponctuelle faisant saillie à partir de l'élément structural, dans lequel l'élément structural comprend un seul trou, dans lequel le relief à source ponctuelle est agencé au moins partiellement inséré dans le trou de l'élément structural, dans lequel au moins un ensemble éclairage est agencé de manière adjacente à la surface intérieure de l'élément structural, dans lequel le relief à source ponctuelle est configuré pour recevoir la lumière générée par le au moins un émetteur de lumière dans ladite région intérieure, transmettre ladite lumière à travers le relief à source ponctuelle et diriger ladite lumière vers le revêtement extérieur.

8. Produit intérieur rétroéclairé (10, 10', 10", 10"') d'un véhicule selon la revendication 7, comprenant une pluralité de structures optiques, la pluralité de structures optiques étant agencées séparément les unes des autres sur la surface extérieure du relief à source ponctuelle, dans lequel chaque structure optique de la pluralité de structures optiques est configurée pour extraire la lumière du relief à source ponctuelle, générant certaines zones d'extraction de lumière pour extraire la lumière vers le revêtement extérieur.

9. Produit intérieur rétroéclairé (10, 10', 10", 10"') d'un véhicule selon l'une quelconque des revendications 7 ou 8, comprenant un masque agencé entre le relief à source ponctuelle et le revêtement extérieur, dans lequel le masque est en un matériau opaque, dans lequel le masque comprend une pluralité de régions de transmission de lumière séparées les unes des autres et configurées pour transmettre la lumière extraite du relief à source ponctuelle, générant certaines zones d'extraction de lumière pour extraire la lumière vers le revêtement extérieur.

10. Produit intérieur rétroéclairé (10, 10', 10", 10‴) d'un véhicule selon l'une quelconque des revendications précédentes, dans lequel le au moins un relief à source ponctuelle comprennent une structure optique sur la surface de réception de lumière, dans lequel ladite structure optique est configurée pour diriger les faisceaux de lumière émis par le au moins un émetteur de lumière vers l'intérieur du relief à source ponctuelle.

11. Produit intérieur rétroéclairé (10, 10', 10", 10‴) d'un véhicule selon l'une quelconque des revendications 4, 7, 8 ou 9, dans lequel le au moins un relief à source ponctuelle est surmoulé sur le au moins un ensemble éclairage.

12. Produit intérieur rétroéclairé (10, 10', 10", 10‴) d'un véhicule selon l'une quelconque des revendications 5, 6, 7, 8 ou 9, dans lequel le au moins un relief à source ponctuelle est surmoulé sur l'élément structural.

13. Produit intérieur rétroéclairé (10, 10', 10", 10‴) d'un véhicule selon l'une quelconque des revendications précédentes, dans lequel le support d'émetteur de lumière agencé à la base des émetteurs de lumière est une carte de circuit imprimé (PCB) commune à certains ou à tous les émetteurs de lumière ou bien un support individuel pour chaque émetteur de lumière.

14. Panneau de porte d'un véhicule, comprenant le produit intérieur rétroéclairé (10, 10', 10", 10"') défini dans la revendication 1.
